# FASCICULE DE BREVET EUROPEEN

(11) **EP 0 528 739 B1**
(45) Date de publication et mention de la délivrance du brevet: **16.10.1996**
(21) Numéro de dépôt: 92420280.7
(22) Date de dépôt: 17.08.1992
(51) Int. Cl.: H04N 1/40, H04L 27/00

(54) **Prédicteur d'image**
Bildprediktor
Image predictor

(30) Priorité: 21.08.1991 FR 9110753
(43) Date de publication de la demande: 24.02.1993
(73) Titulaire: SGS-THOMSON MICROELECTRONICS S.A., F-94250 Gentilly (FR)
(72) Inventeur: Mougeat, Paul, F-38360 Sassenage (FR); Harrand, Michel, F-38120 Saint Egrève (FR)
(74) Mandataire: de Beaumont, Michel

(56) Documents cités:
- EP-A- 0 363 677
- IEEE TRANSACTIONS ON CIRCUITS AND SYSTEMS vol. 36, no. 10, Octobre 1989, NEW YORK, US pages 1267 - 1274 TOKUMICHI MURAKAMI ET AL 'A DSP Architectural Design for Low Bit-Rate Motion Video Codec'
- SIGNAL PROCESSING OF HDTV, II (PROCEEDINGS OF THE THIRD INTERNATIONAL WORKSHOP ON HDTV) Août 1989, TURIN, IT pages 273 - 283 GIUSEPPE MARCONE ET AL 'Reversible Coding of HDTV Progressive Sources by Motion Estimation'

## Description

La présente invention concerne le domaine du traitement des images numériques.

Au fur et à mesure de la sophistication et de l'augmentation de la définition des images affichables sur écran, notamment en télévision haute définition, on a développé divers systèmes pour, au cours de la transmission d'images mobiles, émettre seulement une partie de ces images, à savoir la seule partie des images qui change d'une image à l'autre.

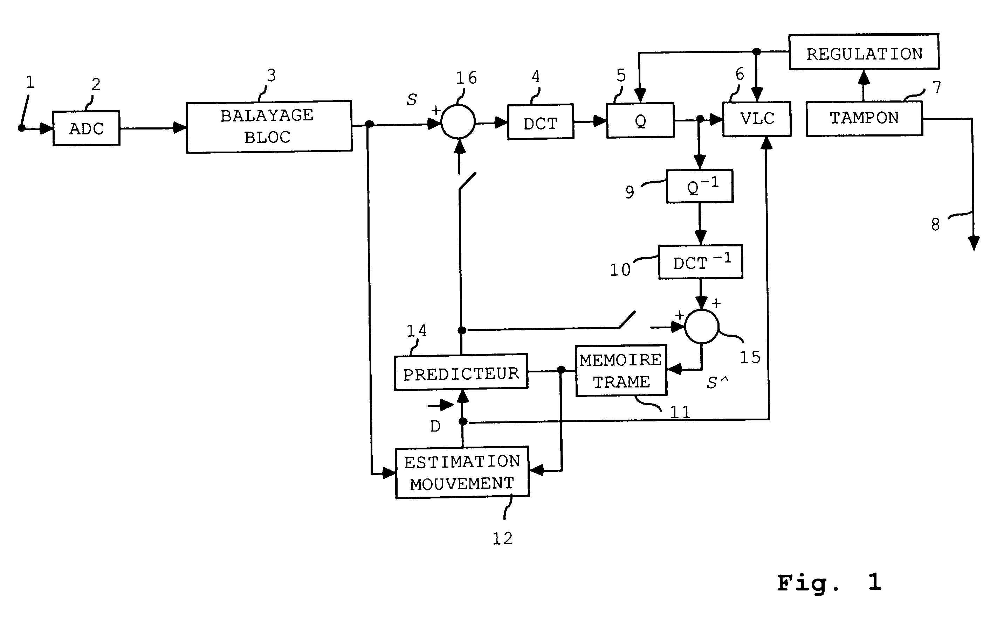

La figure 1 représente à titre d'exemple l'organisation générale d'un codeur moderne d'images de télévision. Celui-ci comprend une entrée de signal vidéo 1, un convertisseur analogique/numérique (ADC) 2, un système de balayage 3 pour réaliser un balayage de l'image par blocs, un dispositif de calcul de transformée cosinus discrète (DCT) 4, un système de quantification (Q) 5, un système de codage à longueur variable (VLC) 6, et une mémoire tampon 7 dont la sortie est envoyée par une ligne 8 vers un canal d'émission ou un dispositif de mémorisation intermédiaire. Grâce à l'utilisation de la transformée cosinus, on réduit le nombre d'informations à émettre. En outre, il est prévu un ensemble permettant de comparer l'image en cours ou image courante à l'image précédente. Ce système comprend des dispositifs de calcul inverse de quantification (Q⁻¹) 9 et de calcul inverse de transformée cosinus (DCT-1) 10 dont les résultats sont fournis à une mémoire de trame 11. La mémoire de trame 11 contient à un instant donné l'image qui précède l'image en cours. Le contenu de cette mémoire de trame est comparé par blocs au contenu de l'image courante dans un estimateur de mouvement 12. L'estimateur 12 recherche pour chaque bloc de l'image courante la partie de l'image précédente qui en est la plus ressemblante. Cette partie la plus ressemblante est appelée partie cible et la distance entre le bloc courant considéré et cette partie cible est appelée vecteur déplacement D. Ce vecteur constitue une première entrée d'un prédicteur 14 qui reçoit par ailleurs la sortie de la mémoire de trame précédente 11. La sortie du prédicteur est renvoyée par un additionneur 15 dans la mémoire de trame 11. Un soustracteur 16 soustrait des informations d'image courante, les informations de l'image précédente sortant de la mémoire de trame et décalées par le prédicteur, bloc à bloc. La sortie du soustracteur 16 est fournie au dispositif de calcul de transformée cosinus 4. Ainsi, sur la sortie 8 du système de codage, on obtient des informations réduites ayant subi deux traitements, le traitement de comparaison à l'image précédente et le traitement de transformée cosinus et de quantification. L'encombrement des canaux de transmission est en conséquence considérablement réduit. Un exemple de codeur similaire peut être trouvé dans EP-A-0 363 677.

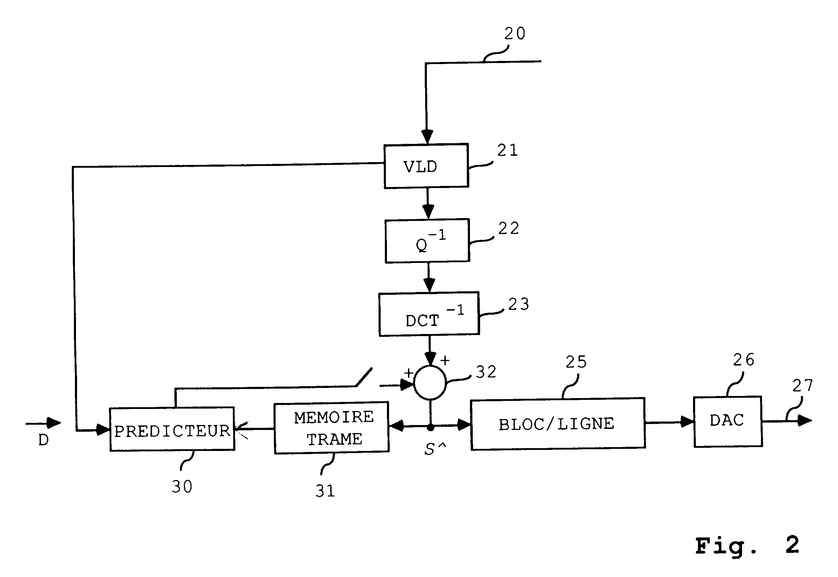

La figure 2 représente un décodeur associé au codeur de la figure 1. Celui -ci reçoit sur son entrée 20 un signal correspondant au signal émis 8. Ce signal est traité par un dispositif de décodage de codes à longueur variable (VLD) 21, un système de calcul de quantification inverse 22, et un système de calcul de transformée cosinus inverse 23. La sortie du système de calcul de transformée cosinus inverse est fournie à un convertisseur de balayage bloc en balayage ligne 25 puis à un convertisseur numérique/analogique (DAC) 26 pour fournir un signal vidéo 27 destiné par exemple à commander un afficheur de télévision. En outre, le système VLD fournit le vecteur déplacement D à un prédicteur 30 dont l'autre entrée est la sortie d'une mémoire de trame 31 et le signal du prédicteur est additionné à la sortie du circuit de calcul de transformée cosinus inverse 32 dont la sortie est fournie d'une part à la mémoire de trame 31, d'autre part au convertisseur de balayage 25.

Ce qui précède est uniquement destiné à indiquer un exemple d'environnement dans lequel peut se situer la présente invention. Celle-ci vise spécifiquement la réalisation du prédicteur 14 ou 30 du codeur ou du décodeur, étant entendu que ces prédicteurs sont identiques mais que l'on expliquera l'invention par souci de simplicité uniquement dans le cadre du circuit de décodage.

Jusqu'à présent, les prédicteurs connus ont été des systèmes complexes occupant une carte de circuit imprimé sur laquelle sont disposés de nombreux composants et notamment de nombreuses mémoires entre lesquelles sont prévues de nombreuses interconnexions.

Un objet de la présente invention est de prévoir une architecture de prédicteur qui se prête à une réalisation sous forme d'un circuit intégré monolithique unique.

Cet objet de la présente invention est atteint en prévoyant un prédicteur destiné à fournir en tant que pixel d'une image courante un ensemble de p pixels cible de l'image précédente de sorte que chaque pixel cible corresponde dans l'image aux pixels voisins du pixel courant décalé d'un vecteur déplacement déterminé, l'image étant balayée par portions de colonnes. Ce prédicteur comprend une mémoire de recherche, dans laquelle sont écrits des pixels de l'image précédente, ayant la dimension d'une portion de colonne additionnée des déplacements maximaux susceptibles d'être produits par le vecteur déplacement, chaque cellule de cette mémoire étant adressable indépendamment en lecture et en écriture ; trois décodeurs d'écriture pour adresser simultanément en écriture trois cellules de trois parties de la mémoire correspondant à une hauteur de trois portions de colonnes adjacentes; p décodeurs de lecture pour adresser simultanément en lecture p cellules de p sous-parties distinctes de la mémoire ; et des moyens de commande des décodeurs d'écriture tels que p écritures successives correspondant à p points voisins dans l'image soient effectuées dans chacune des p sous-parties.

Ces objets, caractéristiques et avantages ainsi que d'autres de la présente invention seront exposés en détail dans la description suivante de modes de réalisation particuliers faite en relation avec les figures jointes parmi lesquelles :
la figure 1 représente un exemple de codeur susceptible d'incorporer un prédicteur selon la présente invention ;
la figure 2 représente un exemple de décodeur susceptible d'incorporer un prédicteur selon la présente invention ;
la figure 3 illustre schématiquement le mode de fonctionnement d'un prédicteur selon la présente invention ;
la figure 4 représente un schéma sous forme de blocs d'un prédicteur selon la présente invention ;
la figure 5 représente un exemple de cellule élémentaire utilisée dans la mémoire d'un prédicteur selon la présente invention ;
la figure 6 illustre schématiquement la mémoire d'un prédicteur selon la présente invention dans le mode d'écriture ;
la figure 7 illustre schématiquement la mémoire d'un prédicteur selon la présente invention dans le mode lecture ; et
la figure 8 illustre schématiquement un mode de réalisation de la Mémoire du prédicteur selon la présente invention.

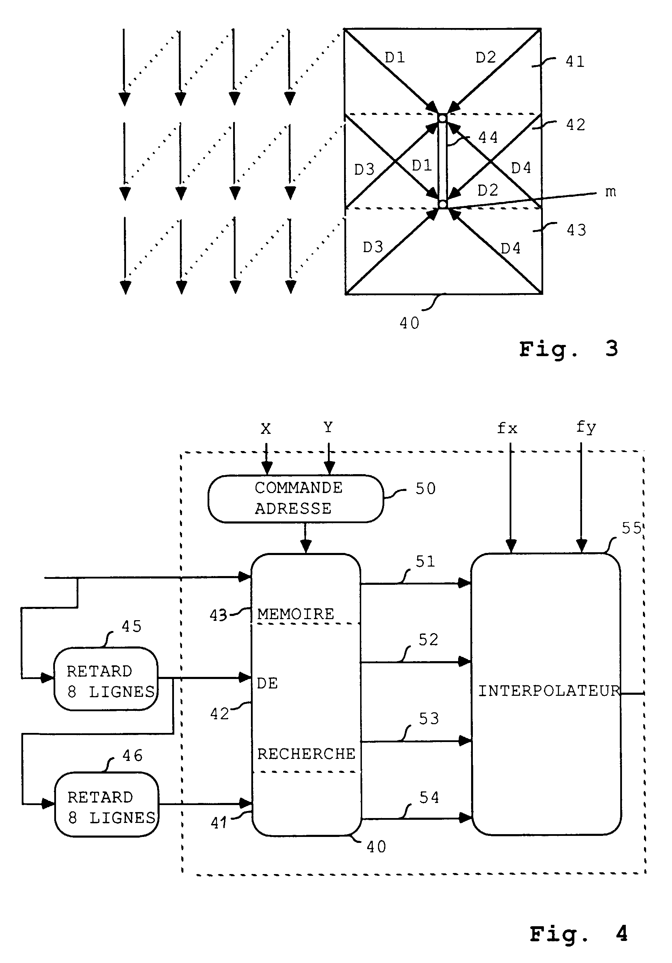

La figure 3 représente symboliquement une mémoire de recherche 40 d'un prédicteur selon la présente invention. Il s'agit d'une mémoire unique mais, pour la simplicité de l'explication, on considérera cette mémoire comme séparée en trois blocs 41, 42, 43. On rappelera que l'ensemble de l'architecture dans laquelle s'insère le prédicteur selon la présente invention est une architecture dans laquelle est déjà prévu un balayage par blocs, c'est-à-dire que chacun des blocs 41, 42 et 43 est rempli en commençant par la case supérieure gauche, puis en descendant selon une colonne et ensuite chaque colonne se décale vers la droite.

On considère que l'on recherche les pixels de l'image en cours devant se trouver dans la colonne centrale du bloc central 42, représentée par un rectangle vertical 44. Ainsi, on cherche à déterminer la valeur devant être attribuée aux points 0 à m de cette colonne pour un vecteur déplacement D donné.

On a indiqué en figure 3, à titre d'exemple, quatre vecteurs déplacements D1, D2, D3, D4 correspondant aux valeurs extrêmes possibles du vecteur déplacement. Ainsi, si le vecteur déplacement est le vecteur D1, la valeur du point 0 de la colonne courante doit correspondre à la valeur mémorisée dans la case supérieure gauche du bloc 41. Pour le vecteur D2, ce sera la valeur mémorisée dans la case supérieure droite du bloc 41 ; pour le vecteur D3, la valeur mémorisée dans la case inférieure gauche du bloc 42 ; et pour le vecteur D4, la valeur mémorisée dans la case inférieure droite du bloc 42. De même, des vecteurs D1, D2, D3, D4 associés au point inférieur m de la colonne 44 ont été figurés. On voit que, pour le point 0 de la colonne 44, la valeur à rechercher dans la mémoire est une valeur se trouvant dans l'un des blocs 41 et 42 et, pour le point m de la colonne 44, la valeur à rechercher se trouve dans l'un des blocs 42 ou 43. Ainsi, en transférant par balayage par bloc les données en provenance de la mémoire de trame dans la mémoire de recherche 40 de la figure 3, on est sûr d'avoir à tout instant dans cette mémoire la valeur recherchée affectée du vecteur déplacement.

Divers systèmes de codage en lecture et en écriture pourront être prévus, connaissant la valeur exacte du vecteur déplacement, pour fournir en sortie, à chaque instant, le point de la mémoire 40 déplacé du vecteur déplacement par rapport au point courant.

En pratique, le problème se complique car, pour améliorer la résolution du système, on prévoit que le vecteur déplacement n'a pas nécessairement une valeur entière conduisant exactement d'un pixel d'une image à un autre. Ainsi, en général, le vecteur déplacement conduit à un point cible intermédiaire entre des pixels voisins. On a donc proposé de fournir en sortie pour chaque point, plutôt que le pixel le plus proche de celui auquel conduit le vecteur de déplacement, l'ensemble des quatre pixels voisins de cette cible et d'effectuer ensuite une interpolation, par exemple une interpolation linéaire.

La figure 4 représente un exemple de structure permettant d'obtenir ce résultat. On retrouve dans cette figure la mémoire de recherche 40 de la figure 3 dont les trois blocs 41, 42, 43 reçoivent des informations décalées de quelques lignes en provenance de la mémoire de trame précédente (mémoire 11 de la figure 1 ou mémoire 31 de la figure 2). Par exemple, le bloc 43 reçoit directement les pixels de la mémoire de trame précédente, le bloc 42 reçoit les pixels décalés de m=8 lignes par un dispositif de retard 45 et le bloc 41 reçoit ces pixels décalés encore de 8 lignes par un dispositif de retard 46. La mémoire de recherche est commandée par un circuit de commande d'adressage 50 contrôlé par les coordonnées X et Y de la partie entière du vecteur déplacement. Cette mémoire est destinée à fournir sur quatre sorties 51, 52, 53, 54, les quatre points voisins du point adressé par la partie entière du vecteur déplacement et ces quatre sorties sont fournies à un interpolateur 55 commandé par des signaux fx et fy correspondant à la partie fractionnaire du vecteur déplacement. Ce circuit d'interpolation ne sera pas décrit en détail ci-après étant connu en lui-même.

La présente invention vise plus particulièrement le mode d'adressage en lecture et en écriture de la mémoire de recherche permettant d'utiliser une mémoire unique pour fournir les valeurs de l'image courante en fonction des pixels de l'image précédente et du vecteur déplacement à la cadence de balayage du système.

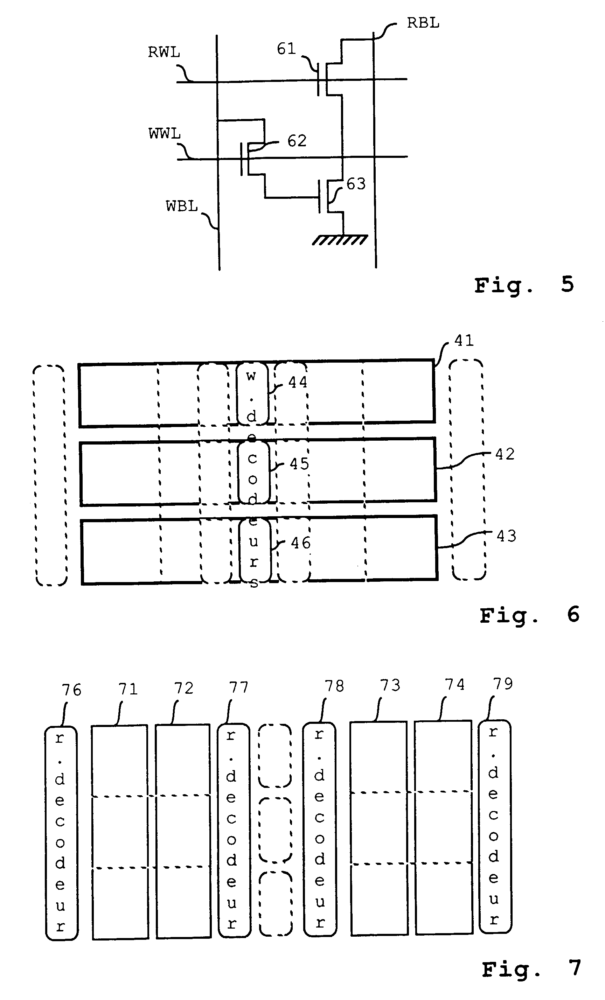

Pour cela, la présente invention utilise une mémoire dont chaque cellule élémentaire est adressable indépendamment en lecture et en écriture. Un exemple de cellule élémentaire permettant d'atteindre ce résultat est illustré en figure 5 où l'on peut voir trois transistors MOS de même type 61, 62 et 63. Les transistors 61 et 63 sont connectés en série entre une ligne de bit de lecture RBL et la masse. La grille du transistor 61 est connectée à une ligne de mot de lecture RWL. La grille du transistor 63 est connectée à une ligne de bit d'écriture WBL par l'intermédiaire du transistor 62 dont la grille est connectée à une ligne de mot d'écriture WWL.

La figure 6 représente l'organisation conceptuelle de la mémoire unique selon l'invention du point de vue de l'écriture. Cette mémoire est partagée en les trois blocs 41, 42, 43 précédemment mentionnés, ces trois blocs étant similairement adressés en ligne et colonne, c'est-à-dire qu'à un instant donné, on effectue un adressage en écriture en trois points correspondant à la même valeur de ligne et de colonne dans ces trois blocs.

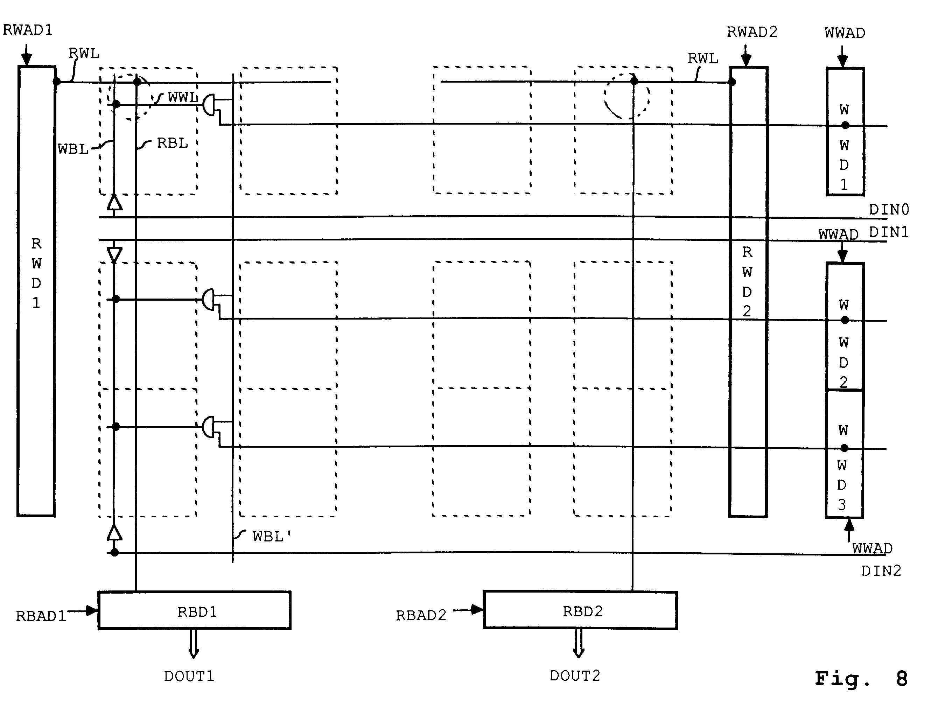

La figure 7 illustre l'organisation conceptuelle de la mémoire selon la présente invention du point de vue de la lecture. Il s'agit alors de fournir à chaque coup d'horloge, simultanément quatre valeurs correspondant à quatre points voisins du point cible. Ainsi, du point de vue de la lecture, la mémoire est partagée en quatre blocs 71, 72, 73, 74 et le remplissage de la mémoire aura été fait de façon que les quatre points voisins que l'on cherche à obtenir à un instant donné se trouvent chacun à l'intérieur d'un bloc différent (71 à 74). Des exemples de modes de remplissage appropriés de la mémoire seront indiqués ci-après.

La figure 8 représente de façon plus détaillée une demi-mémoire selon la présente invention. Seule la moitié gauche est représentée, le circuit se répétant de façon symétrique à droite.

Dans cette figure, on a représenté par des cadres en pointillés des régions contenant des cellules mémoire du type de celles de la figure 5. A chaque case mémoire est (comme on l'a indiqué précédemment) associée une ligne de bit de lecture RBL et une ligne de mot de lecture RWL ainsi qu'une ligne de bit d'écriture WBL et une ligne de mots d'écriture WWL. Un décodeur de lecture de rangées ou décodeur de lecture de mots RWD1 est associé à la moitié gauche des groupes de cellules mémoires représentées. Il permet de sélectionner une ligne de mot RWL. De même un deuxième décodeur de lecture de mots RWD2 est associé à la moitié droite des blocs mémoires représentés et sélectionne une ligne de lecture de mot RWL. Deux autres décodeurs de ligne de mot de lecture sont présents dans la moitié droite (non représentée) du circuit. De même, quatre décodeurs de colonne ou de bit de lecture, dont deux RBD1 et RBD2 sont représentés permettent de sélectionner une ligne de bit de lecture RBL. Ainsi, en adressant les quatre décodeurs de lecture de rangée et les quatre décodeurs de lecture de colonne, on pourra accéder simultanément à quatre cases des blocs mémoires. On obtient les données lues sur les sorties DOUT1 et DOUT2 des décodeurs RBD1 et RBD2. Ces décodeurs reçoivent des adresses de sélection de rangée RWAD1 et RWAD2 et des adresses de sélection de colonne RBAD1 et RBAD2. Le décodeur de rangée est normalement adressé par les bits de poids forts de l'adresse de lecture et le décodeur de ligne colonne par les bits de poids faible de l'adresse de lecture.

En écriture, comme on l'a indiqué précédemment, on accède simultanément à trois parties, représentées horizontalement dans la figure des blocs mémoires. Ceci est réalisé au moyen de décodeur d'écriture de mots WWD1, WWD2 et WWD3 envoyant des signaux sur les lignes WWL correspondantes. Des sous-blocs dans le mode de réalisation particulier sont sélectionnés par un décodeur de colonne non représenté associé à des lignes WBL′. Les données à introduire sont fournies sur des lignes DINO, DIN1, DIN2 reliées aux lignes WBL. On notera que les trois décodeurs de rangées WWD1, WWD2 et WWD3 reçoivent une même adresse WWAD.

Cette organisation est particulièrement économique en circuiterie par rapport à la solution qui aurait constitué à utiliser 12 mémoires indépendantes auquel cas on aurait été amené à tripler la circuiterie relative aux lignes de bits de lecture, aux circuits de précharge, aux décodeurs de colonne et aux amplificateurs de lecture. De même, les décodeurs de lignes d'écriture sont partagés entre les différents plans d'une même ligne. Utiliser 12 mémoires indépendantes reviendrait à quadrupler ces décodeurs.

D'autre part et surtout, utiliser 12 mémoires indépendantes aurait nécessité un mutage de bus de données et d'adresse entre les mémoires qui est évité ici puisque les bus d'adresses passent à travers des décodeurs empilés les uns à côté des autres et qu'il n'y a qu'une seule circuiterie de lecture donc un seul ensemble de quatre bus de données de sortie et non 12. Une telle interconnexion entre des mémoires séparées aurait occupé une surface de silicium importante que l'organisation selon la présente invention permet d'éviter.

### Exemple d'application

On va maintenant décrire un mode d'inscription dans la mémoire, et plus particulièrement dans les quatre portions de mémoire 71, 72, 73 et 74, appelées ci-après M0, M1, M2, M3, pour que la lecture puisse se faire de la façon énoncée précédemment.

On considère d'abord le cas particulier d'une image où:
- le balayage par bloc se fait par colonnes de huit pixels,
- à chaque pixel on fait correspondre un octet de luminance (Y) et un octet de chrominance (C), et
- on transmet séquentiellement l'octet de luminance (Y) et l'octet de chrominance (C) de chaque pixel.

Si on numérote les pixels dans l'ordre où ils arrivent, la représentation en balayage colonne donne le tableau suivant : 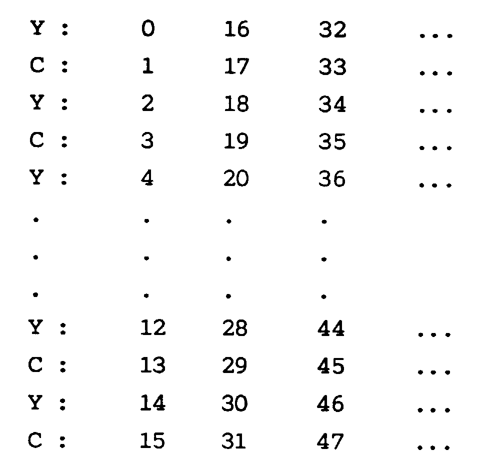 On s'impose la contrainte selon laquelle ces octets doivent être mémorisés de façon à pouvoir ensuite accéder en lecture à quatre pixels voisins simultanément. Par pixels voisins, on désigne les quatre pixels situés en (x,y), (x+1,y), (x,y+1), (x+1,y+1) dans le tableau ci-dessus, d'une part pour la luminance, d'autre part pour la chrominance.

Pour satisfaire cette contrainte, on écrit les quatre octets voisins dans quatre portions de mémoires accessibles simultanément en lecture, c'est-à-dire associées aux quatre décodeurs de lecture 76-79.

Par exemple, les octets de luminance 0, 16, 2, 18 sont des octets voisins et seront écrits respectivement dans les mémoires M0, M1, M2, M3. Les octets de chrominance n'étant pas liés aux octets de luminance, on pourra écrire de la même façon les octets 1, 17, 3, 19 dans les mêmes mémoires M0, M1, M2, M3. On trouvera donc dans chacune des mémoires M0, M1, M2, M3 des octets n'ayant aucune relation de voisinage entre eux. La destination des pixels entrant peut s'exprimer de la façon illustrée par le tableau ci -dessous :

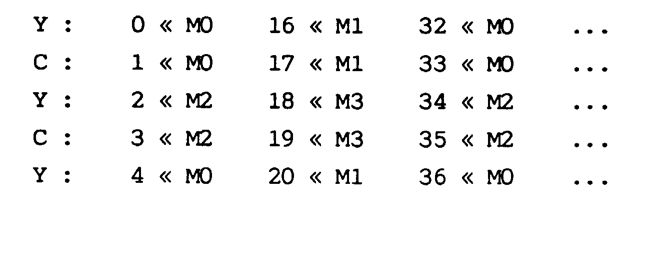

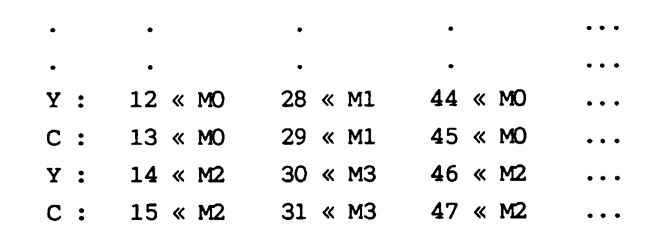

La représentation physique du contenu résultant des mémoires est la suivante :

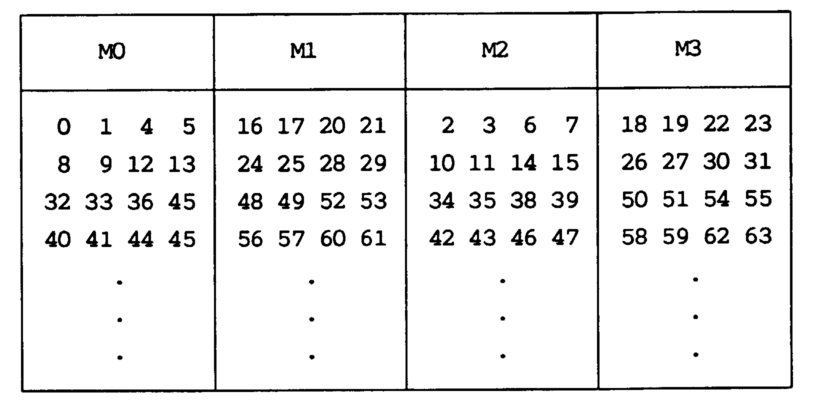

Supposons que le vecteur déplacement pointe sur l'octet 28 ; les quatre pixels voisins sont 28(M1), 44(M0), 30(M3), 46(M2), et sont accessibles pendant le même cycle d'horloge.

La description précédente est valable pour le mode de multiplexage où luminance et chrominance se succèdent de la manière suivante (en considérant que se suivent des lignes comprenant respectivement 64 octets de chrominance bleue (Cb) et 64 octets de chrominance rouge (Cr)) :

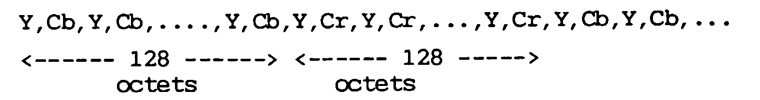

On pourrait considérer d'autres modes :
- le mode luminance seule (mode 2), où l'on trouve :
   soit Y à 8 octets par colonne,
   soit Y à 16 octets par colonne.
- le mode 4:2:2 (mode 3), où l'on trouve :
   Y,Cb,Y,Cr,....,Y,Cb,Y,Cr,
- le mode où luminance et chrominance sont multiplexés par blocs (mode 4) :

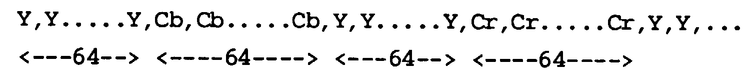

Pour retrouver la même répartition en mémoire que dans le premier mode, il faut modifier le rang d'arrivée du pixel en une valeur correspondant à sa position équivalente dans le premier mode, d'où les transformations suivantes :
- mode 2 : 8 octets par colonne 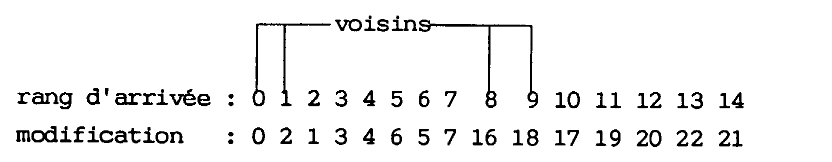
- mode 2 : 16 octets par colonne 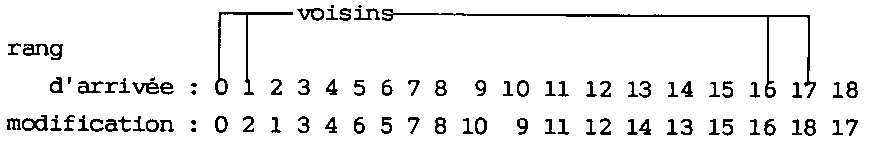
- mode 3 : 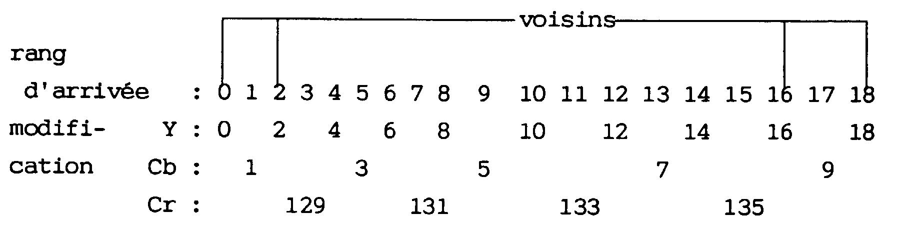
- mode 4 :

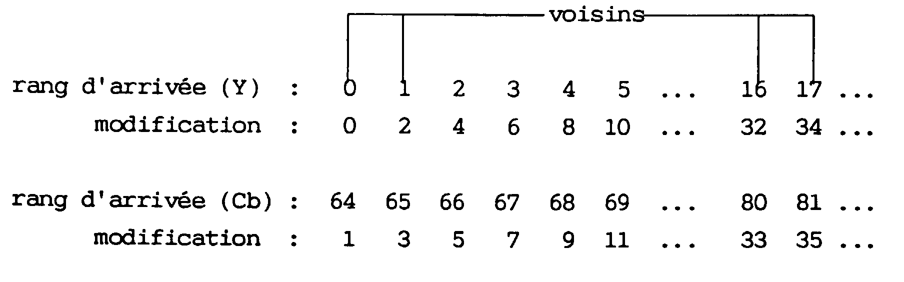

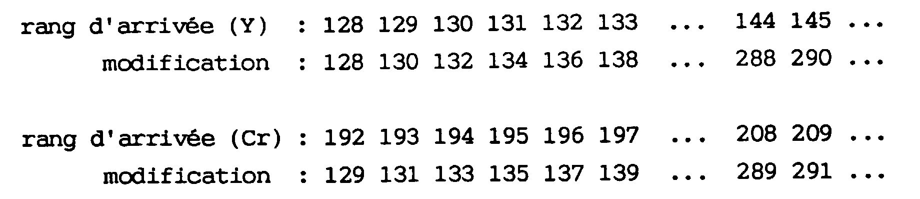

Ce qui précède ne constitue que des exemples particuliers de remplissage de la mémoire de recherche et a pour but de montrer que l'homme de l'art pourra toujours trouver une façon de placer les informations de même nature relatives à quatre pixels voisins dans quatre emplacements de mémoire adressables simultanément en lecture.

## Revendications

1. Prédicteur destiné à fournir en tant que pixel d'une image courante un ensemble de p pixels cible de l'image précédente de sorte que chaque pixel cible corresponde dans l'image aux pixels voisins du pixel courant décalé d'un vecteur déplacement déterminé, l'image étant balayée par portions de colonnes, caractérisé en ce qu'il comprend :
- une mémoire de recherche (40), dans laquelle sont écrits des pixels de l'image précédente, ayant la dimension d'une portion de colonne additionnée des déplacements maximaux susceptibles d'être produits par le vecteur déplacement, chaque cellule de cette mémoire étant adressable indépendamment en lecture et en écriture ;
- trois décodeurs d'écriture (44-46) pour adresser simultanément en écriture trois cellules de trois parties (41-43) de la mémoire correspondant à une hauteur de trois portions de colonnes adjacentes ;
- p décodeurs de lecture (76-79) pour adresser simultanément en lecture p cellules de p sous-parties distinctes (71-79) de la mémoire ; et
- des moyens de commande des décodeurs d'écriture tels que p écritures successives de données correspondant à p points voisins dans l'image soient effectuées dans chacune des p sous-parties.

2. Prédicteur selon la revendication 1, caractérisé en ce que chaque portion de colonne a une hauteur de huit ou seize mots.

3. Prédicteur selon la revendication 1, caractérisé en ce que p est égal à quatre.

4. Prédicteur selon la revendication 2, caractérisé en ce que les mots correspondent aux informations de luminance ou de chrominance d'un pixel.

## Patentansprüche

1. Vorhersagevorrichtung zum Vorsehen eines Satzes von p Zielpixeln bzw. -bildpunkten eines vorhergehendes Bildes als Pixel eines gegenwärtigen Bildes, so daß jedes Zielpixel in dem Bild benachbarten Pixeln des derzeitigen Pixels verschoben um einen bestimmten Verschiebungs- bzw. Bewegungsvektor entspricht, wobei das Bild in Säulen- bzw. Spaltenteilen abgetastet bzw. gescannt wird, dadurch gekennzeichnet, daß die Vorhersagevorrichtung folgendes aufweist:
einen Suchspeicher (40), in dem die Pixel des vorhergehenden Bildes geschrieben sind, wobei zu der Größe bzw. Dimension eines Spaltenteils die maximalen Versetzungen bzw. Bewegungen hinzugefügt bzw. addiert werden, die durch den Versetzungs- bzw. Bewegungsvektor vorgesehen werden können, wobei jede Zelle des Speichers im Lese-/Schreib-Modus unabhängig adressierbar ist;
drei Schreibdekoder (44-46), um im Schreib-Modus gleichzeitig drei Zellen von drei Teilen (41-43) des Speichers zu adressieren, und zwar entsprechend der Höhe von drei Teilen benachbarter Säulen bzw. Spalten;
p Lesedekoder (76-79), um im Lese-Modus gleichzeitig p Zellen von p unterschiedlichen Sub-Teilen (71-79) des Speichers zu adressieren; und
Mittel zum Steuern der Schreibdekoder, so daß p aufeinanderfolgende Datenaufzeichnungen bzw. -schreibungen entsprechend p benachbarter Punkte des Bildes in jedem der p Sub-Teile erreicht werden.

2. Vorhersagevorrichtung gemäß Anspruch 1, dadurch gekennzeichnet, daß jeder Säulen- bzw. Spaltenteil eine Höhe von 8 oder 16 Worten besitzt.

3. Vorhersagevorrichtung gemäß Anspruch 1, dadurch gekennzeichnet, daß p gleich vier ist.

4. Vorhersagevorrichtung gemäß Anspruch 2, dadurch gekennzeichnet, daß die Worte der Luminanz- bzw. Leuchtdichte- oder der Chrominanz- bzw. Farbton- bzw. Bunt-Information eines Pixels entsprechen.

## Claims

1. A predictor for providing as pixels of a current image a set of p target pixels of the preceding image so that each target pixel corresponds in the image to the adjacent pixels of the current pixel shifted by a predetermined motion vector, the image being scanned according to column portions, characterized in that it comprises:
- a search memory (40), in which are written the pixels of the preceding image, having the size of a column portion increased by maximum motions liable to be provided by the motion vector, each cell of said memory being independently addressable in read/write mode;
- three write decoders (44-46) for simultaneously addressing in write mode three cells of three portions (41-43) of said memory corresponding to the height of three portions of adjacent columns;
- p read decoders (76-79) for simultaneously addressing in read mode p cells of p distinct sub-portions (71-79) of said memory; and
- means for controlling the write decoders so that p successive writing of data corresponding to p adjacent points in the image are achieved in each of the p sub-portions.

2. A predictor according to claim 1, characterized in that each column portion has a height of 8 or 16 words.

3. A predictor according to claim 1, characterized in that p is equal to 4.

4. A predictor according to claim 2, characterized in that the words correspond to the luminance or chrominance information of a pixel.
